# EUROPÄISCHE PATENTSCHRIFT

(11) **EP 4 256 280 B1**
(45) Veröffentlichungstag und Bekanntmachung des Hinweises auf die Patenterteilung: **19.11.2025**
(21) Anmeldenummer: 21824301.2
(22) Anmeldetag: 26.11.2021
(51) Int. Cl.: G01F 1/84, G01F 15/18, G01F 15/14

(54) **MESSAUFNEHMER VOM VIBRATIONSTYP SOWIE DAMIT GEBILDETES VIBRONISCHES MESSSYSTEM**
VIBRATION TYPE MEASURING INSTRUMENT AND VIBRONIC MEASURING SYSTEM
DISPOSITIF DE MESURE DU TYPE VIBRANT ET SYSTÈME DE MESURE VIBRONIQUE

(30) Priorität: 03.12.2020 DE 102020132223
(43) Veröffentlichungstag der Anmeldung: 11.10.2023
(73) Patentinhaber: Endress+Hauser Flowtec AG, 4153 Reinach (CH)
(72) Erfinder: BITTO, Ennio, 4147 Aesch (CH); KAMBER, Walter, 4457 Dietgen (CH); SCHWENTER, Benjamin, 4226 Breitenbach (CH); WERNER, Marc, 79639 Grenzach-Wyhlen (DE)
(74) Vertreter: Endress + Hauser Group Services (Deutschland) AG+Co. KG
(86) Internationale Anmeldenummer: PCT/EP2021/083170
(87) Internationale Veröffentlichungsnummer: WO 2022/117456

(56) Entgegenhaltungen:
- DE-A1- 102016 125 616
- US-A1- 2020 116 612
- US-A1- 2020 200 582

## Beschreibung

Die Erfindung betrifft einen Meßaufnehmer vom Vibrationstyp sowie ein damit gebildetes vibronisches Meßsystem.

In der US-A 2020/116612, DE-A 40 26 724, der WO-A 2019/017891 oder der eigenen, nicht vorveröffentlichten internationalen Anmeldung PCT/EP2020/082922 (WO-A 2021/121867) sind jeweils mittels eines Meßaufnehmers vom Vibrationstyp sowie einer damit elektrisch verbundenen Meßsystem-Elektronik gebildete vibronische Meßsysteme, insb. nämlich Coriolis-Massestrom-Meßgeräte, gezeigt, bei denen der jeweilige Meßaufnehmer modular aufgebaut ist. Jeder der Meßaufnehmer ist jeweils mittels zweier Aufnehmer-Module gebildet, von denen ein (stationäres) erstes Aufnehmer-Modul jeweils ein Aufnehmer-Gehäuse mit wenigstens einer von einer Gehäusewand zumindest teilweise umhüllten Kammer sowie wenigstens eine innerhalb des Aufnehmer-Gehäuses plazierte und damit, insb. wieder lösbar, mechanisch verbundene (erste) elektrische Spule aufweist, und von denen ein zweites Aufnehmer-Modul jeweils wenigstens ein (erstes) Rohr mit einer eine äußere Mantelfläche des Rohrs bildenden Rohrwandung und mit einem von nämlicher Rohrwandung umhüllten Lumen sowie wenigstens einen außen am Rohr, nämlich an einem Mittel-Segment der Rohrwandung fixierten, insb. stoffschlüssig damit verbundenen, (ersten) Permanentmagneten aufweist, wobei sich das Mittel-Segment der Rohrwandung zwischen einem einlaßseitigen ersten Segment-Ende und einem davon entfernten auslaßseitigen zweiten Segment-Ende erstreckt. Die Rohrwandung kann beispielweise aus einem Metall oder einem Kunststoff bestehen. Das zweite Aufnehmer-Modul wiederum ist in das erste Aufnehmer-Modul eingesetzt und damit wieder lösbar mechanisch verbunden, derart, daß das zweite Aufnehmer-Modul innerhalb des ersten Aufnehmer-Moduls fest sitzt bzw. nicht beweglich ist, wobei zumindest das Mittel-Segment des Rohrs innerhalb der Kammer des Aufnehmer-Gehäuses plaziert, gleichwohl von der Gehäusewand beabstandet ist und wobei die elektrische Spule und der Permanentmagnet eine Schwingspule bilden. Bei den in der DE-A 40 26 724, WO-A 2019/017891 bzw. PCT/EP2020/082922 gezeigten Meßaufnehmern ist das wenigstens eine Rohr insbesondere mittels eines an das erste Segment-Ende des Mittel-Segments anschließenden (einlaßseitigen) ersten Anschluß-Segments und mittels eines an das zweite Segment-Ende des Mittel-Segments Mittel-Segment anschließenden (auslaßseitigen) zweiten Anschluß-Segments mit dem Aufnehmer-Gehäuse mechanisch gekoppelt, nämlich zumindest mittelbar starr mit dem Aufnehmer-Gehäuse verbunden, derart, daß Verschiebungen der ersten und zweiten Anschluß-Segment relativ zum Aufnehmer-Gehäuse verhindert sind bzw. daß das zweite Aufnehmer-Modul innerhalb des ersten Aufnehmer-Moduls fest sitzt bzw. nicht beweglich ist. Das zweite Aufnehmer-Modul kann zudem austauschbar ausgebildet sein, derart, daß es aus dem ersten Aufnehmer-Modul zerstörungsfrei, ggf. auch werkzeuglos, wieder ausbaubar ist, beispielsweise nämlich von außerhalb des Aufnehmer-Gehäuses herausnehmbar ist, beispielsweise um vor Ort gegen ein, ggf. auch erst nach Fertigstellung und Auslieferung des ersten Aufnehmer-Moduls hergestelltes anderes Exemplar des zweiten Aufnehmer-Moduls ausgetauscht zu werden.

Das wenigstens eine Rohr bzw. dessen Mittel-Segment kann zumindest abschnittsweise gerade und/oder zumindest abschnittsweise gekrümmt ausgebildet, beispielsweise nämlich U-förmig oder V-förmig gebogen, sein. Zudem ist das wenigstens eine Rohr dafür ausgestaltet, in seinem Lumen ein strömendes Fluid zu führen und währenddessen, insb. zwecks Ermittlung von eine oder mehrere Meßgrößen des Fluids repräsentierenden Meßwerten, vibrieren gelassen zu werden, derart, daß das Mittel-Segment Schwingungsbewegungen um eine statische Ruhelage ausführt. Zum Anregen und Aufrechterhalten erzwungener Schwingungen des Mittel-Segments des wenigstens einen Rohrs umfaßt der Meßaufnehmer bzw. das damit gebildete Meßsystem eine elektromechanische Erregeranordnung, wobei die Erregeranordnung beispielsweise mittels der elektrischen Spule und mittels des Permanentmagneten gebildet sein kann. Ferner umfaßt der Meßaufnehmer bzw. das damit gebildete Meßsystem eine elektromechanische Sensoranordnung zum Erfassen erzwungener Schwingungen des Mittel-Segments des wenigstens einen Rohrs und zum Bereitstellen eines oder mehrerer nämliche Schwingungen des Mittel-Segments repräsentierenden Schwingungssignale. Neben dem ersten Rohr kann das zweite Aufnehmer-Modul ferner wenigstens ein zum ersten Rohr baugleiches und bei in das erste Aufnehmer-Modul eingebautem zweiten Aufnehmer-Modul gleichermaßen wie das erste Rohr innerhalb des Aufnehmer-Gehäuses plaziertes und damit, insb. wieder lösbar, mechanisch verbundenes zweites Rohr aufweisen.

Jeder der Meßaufnehmer weist (naturgemäß) mehrere gedachte Bezugsachsen auf, beispielsweise derart, daß eine erste Bezugsachse einen Mittelpunkt (geometrischen Schwerpunkt) einer einen Strömungsquerschnitt des ersten Segment-Endes fassenden ebenen ersten Querschnittsfläche des Mittels-Segments und einen Mittelpunkt einer einen Strömungsquerschnitt des zweiten Segment-Endes fassenden ebenen zweiten Querschnittsfläche des Mittel-Segments imaginär verbindet, daß eine zweite Bezugsachse mit einer Längsachse der elektrischen Spule koinzidiert bzw. durch nämliche Längsachse festgelegt ist und daß eine dritte Bezugsachse mit einer Längsachse des Permanentmagneten koinzidiert bzw. durch nämliche Längsachse festgelegt ist. Zudem können eine sowohl die erste Bezugsachse als auch die zweite Bezugsachse jeweils rechtwinklig schneidende vierte Bezugsachse des Meßaufnehmers, eine sowohl die erste Bezugsachse als auch die dritte Bezugsachse jeweils rechtwinklig schneidende fünfte Bezugsachse sowie eine sowohl die dritte Bezugsachse als auch eine eine Leitkurve (Direktrix) einer durch die äußere Mantelfläche des Rohrs festgelegten Kanalfläche des Mittels-Segements rechtwinklig schneidende sechste Bezugsachse definiert werden. Von den vorbezeichneten gedachten Bezugsachsen spannen zudem die ersten und zweiten Bezugsachsen bei in statischer Ruhelage befindlichem Rohr eine gedachte erste Bezugsebene des Meßaufnehmers, die zweiten und vierten Bezugsachsen eine gedachte zweite Bezugsebene des Meßaufnehmers, die dritten und fünften Bezugsachsen eine dritte Bezugsebene des Meßaufnehmers und die dritten und sechsten Bezugsachsen eine vierte Bezugsebene des Meßaufnehmers auf. Typischerweise ist der Permanentmagnet bei konventionellen Meßaufnehmern so am Mittel-Segment angebracht, nämlich so positioniert und so ausgerichtet, daß eine (Flächen-)Normale der vorbezeichneten vierten Bezugsebene und eine (Flächen-)Normale eines Strömungsquerschnitts des Mittel-Segments, von dem ein Mittelpunkt dem Schnittpunkt der vorbezeichneten sechsten Bezugsachse mit der vorbezeichneten Leitkurve entspricht bzw. damit koinzidiert, zueinander im wesentlichen bzw. zumindest näherungsweise parallel sind bzw. daß die beiden zugehörigen (Bezugs-)Flächen komplanar sind.

Untersuchungen an solchen modular aufgebauten Meßwandlern bzw. damit gebildeten Meßsystemen haben gezeigt, daß die Meßgenauigkeit, nämlich die Genauigkeit mit der mittels des jeweiligen Exemplars des Meßsystems die Meßwerte für die wenigstens eine Meßgröße ermittelt werden, nach einem Austauschen eines aktuellen Exemplars (lediglich) des zweiten Aufnehmer-Moduls gegen ein nominell baugleiches neues, beispielsweise auch erst nach Fertigstellung und Auslieferung des ersten Aufnehmer-Moduls hergestelltes, Exemplar des zweiten Aufnehmer-Moduls im Vergleich zur zuvor erzielten Meßgenauigkeit gelegentlich geringer ausfallen kann bzw. daß die Meßgenauigkeit des jeweiligen Meßsystems über mehrere solche Austauschzyklen hinweg in erheblichem Maße schwanken kann. Weiterführende Untersuchungen haben gezeigt, daß die vorbezeichneten Schwankungen der Meßgenauigkeiten u.a. darauf zurückzuführen sein können, daß bedingt durch unvermeidliche Toleranzen bei der Herstellung des zweiten Aufnehmer-Moduls einzelne Exemplare des zweiten Aufnehmer-Moduls entsprechend hohe Varianzen bzw. Exemplarstreuungen aufweisen können; dies im besonderen auch derart, daß die Mittel-Segmente einzelner Exemplare des wenigstens einen Rohrs von einer dafür spezifizierten perfekt ebenen, nämlich eine vollständig in der ersten Bezugsebene verlaufende Leitkurve aufweisenden (Rohr-)Form abweichen, so daß im Ergebnis die Leitkurve der Kanalfläche des jeweiligen Mittels-Segments (auch) bei jeweils in statischer Ruhelage befindlichem Rohr teilweise außerhalb der ersten Bezugsebene des Meßaufnehmers verläuft, ggf. auch die erste Bezugsebene einmal oder sogar mehrmals schneidet. Infolge einer solcher Exemplarstreuung bei der (Rohr-)Form können bei herkömmlichen Meßaufnehmern die zweiten und dritten Bezugsebenen einzelner Meßaufnehmer(-Exemplare) zueinander soweit parallel verschoben sein, daß nämliche Bezugsebenen zum einen unterschiedliche Abstände aufweisen und daß zum anderen diese Abstände gelegentlich sehr groß sein nämlich, mehr als 1 mm betragen können. Alternativ dazu können die zweite und dritten Bezugsebenen solcher Meßaufnehmer(-Exemplare) soweit gegeneinander verdreht sein, daß sie einander unter einem gelegentlich auch sehr großen, nämlich mehr als 1° betragenden Winkel schneiden. Damit einhergehend kann auch ein kleinste Abstand zwischen Rohrwandung und Spule, mithin kann ein zwischen einer dem Permanentmagneten zugewandten Stirnseite der Spule und einer der Spule zugewandten Stirnseite des Permanentmagneten etablierter (kleinster) Abstand zum einen eine signifikante Abweichung von einem dafür spezifizierten Nennwert, mithin eine entsprechend hohe Exemplarstreuung aufweisen und kann nämlicher Abstand zwischen Spule und Permanentmagnet zum anderen gelegentlich auch vergleichsweise hohe Werte annehmen, mithin mit einer vergleichsweise hohen Spannweite schwanken.

Dem Rechnung tragend besteht eine Aufgabe der Erfindung darin, modularer Meßaufnehmer der vorgenannten Art dahingehend zu verbessern, daß damit gebildete vibronische Meßsysteme auch trotzt einer hohen Exemplarstreuung bei der (Rohr-)Form des jeweiligen wenigstens einen Rohrs, mithin einer entsprechend hohen Exemplarstreuung bei den damit jeweils gebildeten zweiten Aufnehmer-Modulen eine gleichbleibend hohe Meßgenauigkeit; dies im besonderen auch bei einer Vielzahl von Austauschzyklen, bei denen jeweils ein verbrauchtes Exemplar des zweiten Aufnehmer-Moduls gegen ein neues Exemplar des zweiten Aufnehmer-Moduls ausgetauscht wird.

Zur Lösung der Aufgabe besteht die Erfindung in einem Meßaufnehmer vom Vibrationstyp, gemäß dem Anspruch 1.

Darüberhinaus besteht die Erfindung auch in einem mittels eines solchen Meßaufnehmers gebildeten vibronischen Meßsystem, beispielsweise nämlich in einem Coriolis-Massenstrom-Meßgerät, welches Meßsystem zudem eine an die wenigstens eine Spule, beispielsweise wiederlösbar, elektrisch angeschlossene Meßsystem-Elektronik umfaßt, die wiederum Elektronik eingerichtet ist, mittels eines elektrischen Treibersignals, beispielsweise mit einem eingeprägten Wechselstrom, elektrische Leistung in die Spule einzuspeisen und/oder eine, beispielsweise Schwingungen des Mittel-Segments repräsentierende, elektrische (Wechsel-)Spannung von der Spule abzugreifen, beispielsweise nämlich anhand der (Wechsel-)Spannung Schwingungen des Mittel-Segments auszuwerten und/oder Meßwerte für wenigstens eine Meßgröße eines im Rohr strömenden Fluids zu ermitteln.

Nach einer ersten Ausgestaltung der Erfindung ist ferner vorgesehen, daß das zweite Aufnehmer-Modul austauschbar ausgebildet ist, derart, daß es aus dem ersten Aufnehmer-Modul, beispielsweise zerstörungsfrei, wieder ausbaubar ist, beispielsweise nämlich von außerhalb des Aufnehmer-Gehäuses herausnehmbar ist.

Erfindungsgemäß ist ferner vorgesehen, daß der Meßaufnehmer eine sechste Bezugsachse aufweist, die sowohl die dritte Bezugsachse als auch die Leitkurve jeweils rechtwinklig schneidet, und daß die dritten und sechsten Bezugsachsen eine gedachte vierte Bezugsebene des Meßaufnehmers aufspannen. Dabei ist ferner vorgesehen, daß das Mittel-Segment eine sowohl vom ersten Segment-Ende als auch vom zweiten Segment-Ende beabstandete dritte Querschnittsfläche mit einer, beispielsweise im wesentlichen in eine Strömungsrichtung eines im Rohr geführten strömenden Fluids weisenden, (Flächen-)Normale aufweist, die einen Strömungsquerschnitt faßt, von dem ein Mittelpunkt dem Schnittpunkt der sechsten Bezugsachse mit der Leitkurve entspricht bzw. damit koinzidiert; dies in der Weise, daß der Strömungsquerschnitt der dritten Querschnittsfläche und die vierte Bezugsebene einander unter Bildung eines von Null verschiedenen, beispielsweise nämlich mehr als 0,1° betragenden, (kleinsten) Schnittwinkels imaginär schneiden.

Nach einer zweiten Ausgestaltung der Erfindung ist ferner vorgesehen, daß die dritte Bezugsachse (x2) und die (Flächen-)Normale des Strömungsquerschnitts der dritten Querschnittsfläche windschief sind, insb. derart, daß die sechste Bezugsachse (y3) einer Minimaltraverse nämlicher (Flächen-)Normalen und der dritten Bezugsachse (x2) entspricht.

Nach einer dritten Ausgestaltung der Erfindung ist ferner vorgesehen, daß die zweiten und dritten Bezugsachsen parallel sind, beispielsweise nämlich zusammenfallen.

Nach einer vierten Ausgestaltung der Erfindung ist ferner vorgesehen, daß das wenigstens eine Rohr mittels eines an das erste Segment-Ende des Mittel-Segments anschließenden, beispielsweise einlaßseitigen, ersten Anschluß-Segments und mittels eines an das zweite Segment-Ende des Mittel-Segments anschließenden, beispielsweise auslaßseitigen, zweiten Anschluß-Segments mit dem Aufnehmer-Gehäuse mechanisch gekoppelt ist, beispielsweise nämlich starr, nämlich derart mit dem Aufnehmer-Gehäuse verbunden ist, daß Verschiebungen der ersten und zweiten Anschluß-Segment relativ zum Aufnehmer-Gehäuse verhindert sind und/oder daß das zweite Aufnehmer-Modul innerhalb des ersten Aufnehmer-Moduls fest sitzt bzw. nicht beweglich ist.

Nach einer fünften Ausgestaltung der Erfindung ist ferner vorgesehen, daß das wenigstens eine Rohr, beispielsweise nämlich dessen Mittel-Segment bzw. die Leitkurve, in Projektion auf die erste Bezugsebene U-förmig oder V-förmig ausgebildet ist.

Nach einer sechsten Ausgestaltung der Erfindung ist ferner vorgesehen, daß das zweite Aufnehmer-Modul weiters wenigstens ein zum ersten Rohr baugleiches und/oder gleichermaßen wie das erste Rohr innerhalb des Aufnehmer-Gehäuses plaziertes und damit, beispielsweise wieder lösbar, mechanisch verbundenes zweites Rohr aufweist.

Nach einer siebenten Ausgestaltung der Erfindung ist ferner vorgesehen, daß die elektrische Spule und der Permanentmagnet eine Schwingspule bilden.

Nach einer achten Ausgestaltung der Erfindung ist ferner vorgesehen, daß die elektrische Spule und der Permanentmagnet eine Tauchspule bilden.

Nach einer ersten Weiterbildung der Erfindung umfaßt der Meßaufnehmer weiters: eine elektromechanische Erregeranordnung zum Anregen und Aufrechterhalten erzwungener Schwingungen des Mittel-Segments des wenigstens einen Rohrs. Nämliche Erregeranordnung kann beispielsweise mittels der elektrischen Spule und mittels des Permanentmagneten gebildet sein.

Nach einer zweiten Weiterbildung der Erfindung umfaßt der Meßaufnehmer weiters: eine elektromechanische Sensoranordnung zum Erfassen erzwungener Schwingungen des Mittel-Segments des wenigstens einen Rohrs und zum Bereitstellen wenigstens eines nämliche Schwingungen des Mittel-Segments repräsentierenden Schwingungssignals. Nämliche Sensoranordnung kann beispielsweise mittels der elektrischen Spule und mittels des Permanentmagneten gebildet sein.

Ein Grundgedanke der Erfindung besteht darin, eine für die Meßgenauigkeit von erfindungsgemäßen vibronischen Meßsystemen schädlichen Einfluß einer naturgemäß hohen Exemplarstreuungen der für die Herstellung einer Vielzahl von zweiten Aufnehmer-Modulen jeweils verwendeten Exemplare des wenigstens einen Rohrs dadurch zu verringern, indem der wenigstens eine Permanentmagnet, beispielsweise auch jeder der der Bildung der Sensor- und/oder Erregeranordnung des final fertiggestellten Exemplars des modularen Meßwandlers dienlichen Permanentmagnete, jeweils so am Mittel-Segment des jeweiligen Rohrs angebracht, nämlich so positioniert und so ausgerichtet wird, daß nämlicher Permanentmagnet, obwohl das Mittel-Segment des jeweiligen Exemplars des Rohrs von einer dafür spezifizierten, beispielsweise perfekt ebenen, (Rohr-)Form nicht systematisch, mithin nicht vorhersehbar abweicht, in einer endgültigen Einbaulage innerhalb des jeweiligen Exemplars des damit fertiggestellten Meßsystems eine dafür vorgegebenen, nämlich in Relation zur jeweils korrespondierenden Spule des ersten Aufnehmer-Moduls entsprechend spezifizierten Position und Lage stationiert ist; dies insbesondere auch derart, daß damit einhergehend (und im Unterschied zu konventionellen zweiten Aufnehmer-Modulen bzw. damit gebildeten Meßaufnehmern) die von der Längsachse des Permanentmagneten sowie die die Leitkurve der Kanalfläche des Mittels-Segements rechtwinklig schneidende (sechste) Bezugsachse aufgespannte (vierte) Bezugsebene des Meßaufnehmers und die mit ihrem Mittelpunkt auf dem Schnittpunkt nämlicher (sechsten) Bezugsachse mit der Leitkurve liegenden Querschnittsfläche des Mittel-Segements weder komplanar noch parallel sind, sondern einander unter Bildung eines signifikant von Null verschiedenen, nämlich mehr als 0,1° betragenden, (kleinsten) Schnittwinkels imaginär schneiden bzw. daß die (Flächen-)Normalen nämlicher Querschnittsfläche und der vorbezeichneten (vierten) Bezugsebene des Meßaufnehmers windschief sind. Die Erfindung basiert u.a. auch auf der überraschenden Erkenntnis, daß der bei fertiggestelltem Meßaufnehmer(-Exemplar) zwischen der dem Permanentmagneten zugewandten Stirnseite der Spule und der der Spule zugewandten Stirnseite des Permanentmagneten etablierten Abstand einerseits einen sehr hohen Beitrag zur mit dem jeweiligen Meßsystem erzielbaren Meßgenauigkeit leistet und daß nämlicher Abstand anderseits bei der Fertigung modularer Meßwandler, wenngleich zu Lasten einer bei herkömmlichen Meßwandlern einfachen Positionierung und Ausrichtung des Permanentmagneten in der vorbeschriebenen Weise, mit einem vergleichsweise geringen technischen Mehraufwand kontrolliert und sehr genau eingestellt werden kann. Im Ergebnis einer solchen relativ einfach zu bewerkstelligen geringfügig anderen Position und Lage des Permanentmagneten kann bei vibronischen Meßsystemen der in Rede stehenden Art eine erhebliche Verbesserung der Meßgenaugkeit bzw. eine gleichbleibend hohe Meßgenauigkeit auch für eine Vielzahl von Austauschzyklen der vorgenannten Art erzielt werden.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1a: schematisch in einer perspektivischen, teilweise auch transparenten Seitenansicht einen modularen, nämlich mittels zweier Aufnemer-Module gebildeten, insb. auch der Bildung eines vibronischen Meßsystems dienlichen, Meßaufnehmer vom Vibrationstyp;
- Fig. 1b: schematisch in einer perspektivischen Seitenansicht eine Variante eines modularen Meßaufnehmers vom Vibrationstyp;
- Fig. 2 und 3: schematisch jeweils in einer perspektivischen Seitenansicht für die Bildung des Meßaufnehmer nach Fig. 1a bzw. 1b geeignete erste und zweite Aufnehmer-Module; und
- Fig. 4, 5: schematisch und teilweise geschnitten Seitenansicht für die Bildung
- und 6: Einzelheiten der ersten und zweiten Aufnehmer-Module gemäß den Fig. 1, 2 bzw. 3.

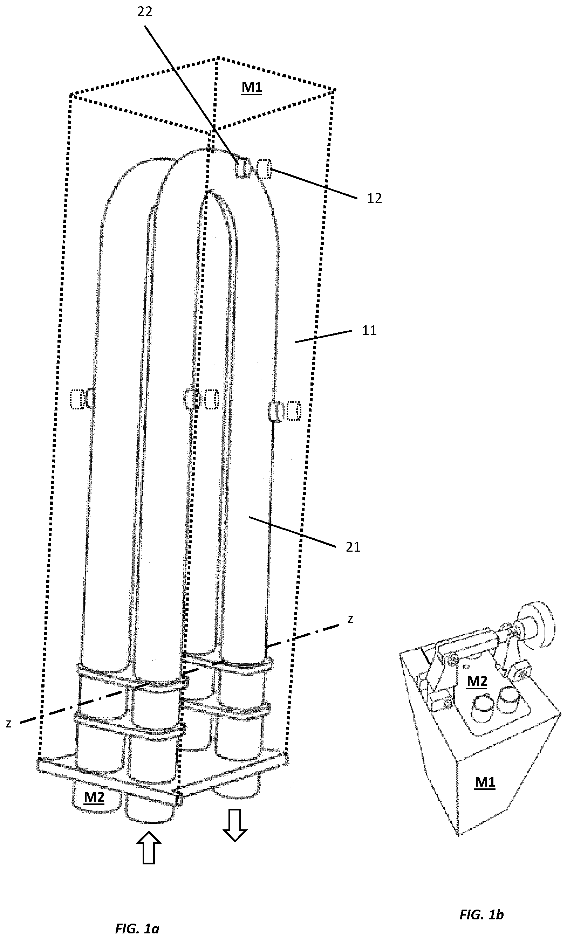

In Fig. 1a und 1b sind Ausführungsbeispiele eines Meßaufnehmers vom Vibrationstyp dargestellt.

Der Meßaufnehmer ist modular aufgebaut, derart, daß er ein erstes Aufnehmer-Modul M1 sowie ein zweites Aufnehmer-Modul M2 umfaßt.

Das Aufnehmer-Modul M1 des erfindungsgemäßen Meßaufnehmers weist ein Aufnehmer-Gehäuse 11 mit wenigstens einer von einer Gehäusewand 11+ zumindest teilweise umhüllten Kammer 11* sowie wenigstens eine innerhalb nämlicher Kammer 11* plazierte und mit der Gehäusewand 11+ zumindest mittelbar mechanisch verbundene, beispielsweise im wesentlichen zylindrische, erste elektrische Spule 12 auf. Das Aufnehmer-Modul M2 wiederum weist wenigstens ein, beispielsweise zumindest abschnittsweise gerades und/oder zumindest abschnittsweise gebogenes, (erstes) Rohr 21 sowie wenigstens einen, beispielsweise im wesentlichen zylindrischen, ersten Permanentmagneten 22 auf. Das - beispielsweise im wesentlichen U- oder V-förmig ausgebildete - Rohr 21 umfaßt eine eine äußere Mantelfläche des Rohrs 21 bildenden Rohrwandung 21+, beispielsweise aus einem Metall oder einem Kunststoff, sowie einen von nämlicher Rohrwandung 21+ umhülltes Lumen 21*. Zudem ist der Permanentmagnet 22 außen an einem sich zwischen einem - hier einlaßseitigen - ersten Segment-Ende und einem davon entfernten - hier auslaßseitigen - zweiten Segment-Ende erstreckenden Mittel-Segment 21a der Rohrwandung fixiert, beispielsweise nämlich stoffschlüssig damit verbunden.

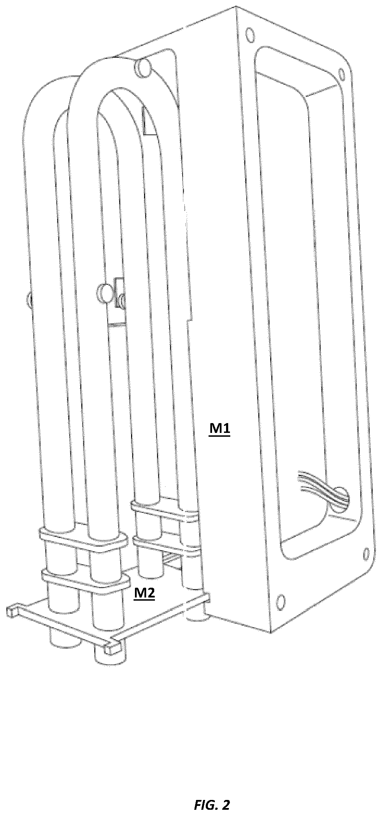

Wie in Fig. 1a dargestellt bzw. aus einer Zusammenschau der Fig. 1a, 1b, 2 und 3 ohne weiters ersichtlich - ist (bei fertiggestelltem Meßaufnehmer) das Aufnehmer-Modul M2 in das Aufnehmer-Modul M1 eingesetzt und damit wieder lösbar mechanisch fest verbunden, derart, daß zumindest das Mittel-Segment 21a des Rohrs innerhalb der Kammer des Aufnehmer-Gehäuses 11 plaziert, gleichwohl von dessen Gehäusewand 11+ beabstandet ist; dies im besonderen in der Weise, daß das Aufnehmer-Modul M2 innerhalb des Aufnehmer-Moduls M1 fest sitzt bzw. nicht beweglich ist, und/oder derart, daß die elektrische Spule 12 und der Permanentmagnet 22 eine Schwing- bzw. Tauchspule bilden. Nach einer weiteren Ausgestaltung sind die Aufnehmer-Module M1, M2 so ausgebildet, daß bei in finaler Einbaulage im Aufnehmer-Modul M1 angeordnetem und fixiertem Aufnehmer-Modul M2 das wenigstens eine Rohr mittels eines an das erste Segment-Ende des Mittel-Segments anschließenden - hier einlaßseitigen - ersten Anschluß-Segments 21b und mittels eines an das zweite Segment-Ende des Mittel-Segments anschließenden - hier auslaßseitigen - zweiten Anschluß-Segments 21c mit dem Aufnehmer-Gehäuse mechanisch gekoppelt ist; dies im besonderen in der Weise, daß das wenigstens eine Rohr starr, nämlich derart mit dem Aufnehmer-Gehäuse 11 verbunden ist, daß Verschiebungen der vorbezeichneten Anschluß-Segmente 21b, 21c relativ zum Aufnehmer-Gehäuse 11 verhindert sind bzw. daß das Aufnehmer-Modul M2 innerhalb des Aufnehmer-Moduls M1 fest sitzt bzw. nicht beweglich ist. Nach einer weiteren Ausgestaltung der Erfindung ist das Aufnehmer-Modul M2 zudem austauschbar ausgebildet, derart, daß es (nach dessen Einbau in das Aufnehmer-Modul M1 auch wieder) aus dem Aufnehmer-Modul M1 wieder ausbaubar ist; dies im besonderen in der Weise, daß es zerstörungsfrei und/oder von außerhalb des Aufnehmer-Gehäuses 11 aus dem Aufnehmer-Gehäuse 11 bzw. dem damit gebildeten Aufnehmer-Modul M1 herausnehmbar ist, - wie in Fig. 1b angedeutet - ggf. auch ohne Verwendung von (Montage-)Werkzeugen, etwa um vor Ort durch ein, ggf. auch erst nach Fertigstellung und Auslieferung des Aufnehmer-Moduls M1 hergestelltes anderes Exemplar des zweiten Aufnehmer-Moduls (M2*) ersetzt zu werden.

Das Rohr 21 des erfindungsgemäßen Meßaufnehmers ist ferner dafür eingerichtet, in seinem Lumen ein, beispielsweise mit einer vorgebbaren und/oder vom vorbezeichneten ersten Segment-Ende zum vorbezeichneten zweiten Segment-Ende weisenden Strömungsrichtung, strömendes Fluid zu führen und währenddessen vibrieren gelassen zu werden, derart, daß das Mittel-Segment 21a Schwingungsbewegungen um eine (hier durch die Einbaulage des Aufnehmer-Moduls M2 innerhalb des Aufnehmer-Moduls M1 definierte) statische Ruhelage ausführt. Dementsprechend umfaßt der Meßaufnehmer nach einer weiteren Ausgestaltung der Erfindung eine elektromechanische Erregeranordnung zum Anregen und Aufrechterhalten erzwungener Schwingungen des Mittel-Segments des wenigstens einen Rohrs und/oder eine elektromechanische Sensoranordnung zum Erfassen erzwungener Schwingungen des Mittel-Segments des wenigstens einen Rohrs und zum Bereitstellen wenigstens eines nämliche Schwingungen des Mittel-Segments repräsentierenden Schwingungssignals, wobei die vorbezeichnete Erregeranordnung oder auch die vorbezeichnete Sensoranordnung beispielsweise auch mittels der elektrischen Spule 12 und mittels des Permanentmagneten 22 gebildet sein kann. Der erfindungsgemäße Meßaufnehmer kann dementsprechend beispielsweise zudem auch Bestandteil eine vibronischen Meßsystem, beispielsweise nämlich eines Coriolis-Massenstrom-Meßgeräts, sein, das außer dem Meßaufnehmer eine an dessen wenigstens eine Spule 21, beispielsweise auch wiederlösbar, elektrisch angeschlossene Meßsystem-Elektronik umfaßt. Die vorbezeichnete Meßsystem-Elektronik wiederum kann, wie bei solchen vibronischen durchaus üblich - beispielsweise dafür eingerichtet sein, mittels eines elektrischen Treibersignals, beispielsweise mit einem eingeprägten Wechselstrom, elektrische Leistung in die Spule einzuspeisen und/oder eine, insb. Schwingungen des Mittel-Segments repräsentierende, elektrische (Wechsel-)Spannung von der Spule abzugreifen; dies im besonderen auch dafür, um anhand der (Wechsel-)Spannung Schwingungen des Mittel-Segments auszuwerten und/oder Meßwerte für wenigstens eine Meßgröße eines im Rohr 21 strömenden Fluids zu ermitteln. Außer dem Rohr 12 kann das Aufnehmer-Modul M2, wie auch in Fig. 1a, 2 bzw. 3 jeweils angedeutet, ferner wenigstens ein zum Rohr 21 baugleiches und/oder gleichermaßen wie nämliches Rohr 21 innerhalb des Aufnehmer-Gehäuses 11 plaziertes und damit, ggf. auch wieder lösbar mechanisch verbundenes zweites Rohr aufweisen. Das vorbezeichnete zweite Rohr kann, wie bei solchen Meßaufnehmern bzw. damit gebildeten Meßsystemen durchaus üblich, beispielsweise zum Rohr 21 parallel angeordnet und/oder zum Rohr 21 strömungstechnisch parallel geschaltet sein, beispielsweise derart, daß die nunmehr wenigstens zwei Rohre des Meßaufnehmers im Betrieb simultan zwei Teilströme desselben Fluids führen und währenddessen vibrieren gelassen werden. Alternativ oder in Ergänzung kann der Meßaufnehmer zudem eine Vielzahl weiterer solcher mittels einer jeweiligen elektrischen Spulen und einem entsprechend zugehörigen Permanentmagneten gebildete Spule-Magnet-Anordnungen aufweisen, beispielsweise derart, daß der Meßaufnehmer - wie auch in Fig. 1a schematisch angedeutet und wie bei Meßaufnehmern der in Rede stehenden Art durchaus üblich - wenigstens zwei weitere, insb. gleichermaßen wie die Spule 12 mit der Gehäusewand 11+ mechanisch verbundene und/oder zur Spule 12 im wesentlichen baugleiche - Spulen sowie dementsprechend wenigstens zwei weitere, insb. gleichermaßen wie der Permanentmagnet 22 am Mittel-Segment 21a angebrachte und/oder zum Permanentmagnet 22 im wesentlichen baugleiche - Permanentmagnete aufweist und/oder derart, daß der Meßaufnehmer pro Rohr jeweils drei daran voneinander beabstandet angebrachte Permanentmagnete sowie jeweils drei gegenüberliegende am Gehäuse 11 angebrachte elektrische Spulen aufweist.

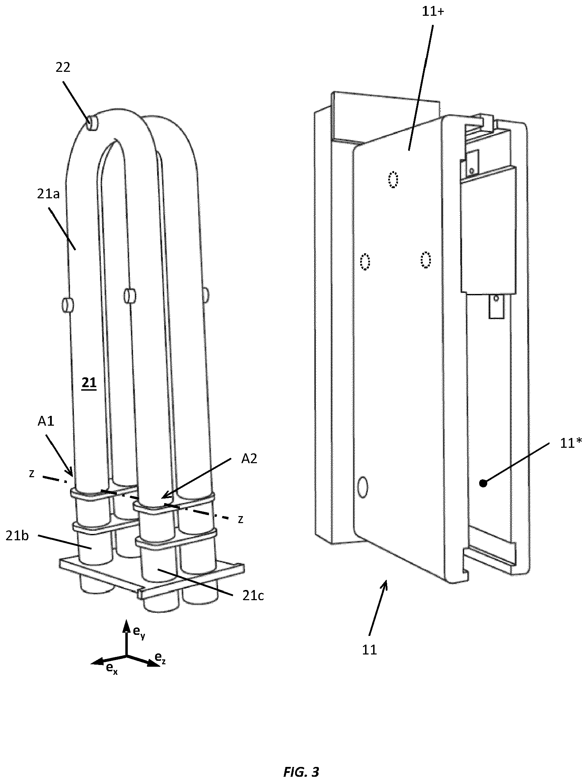

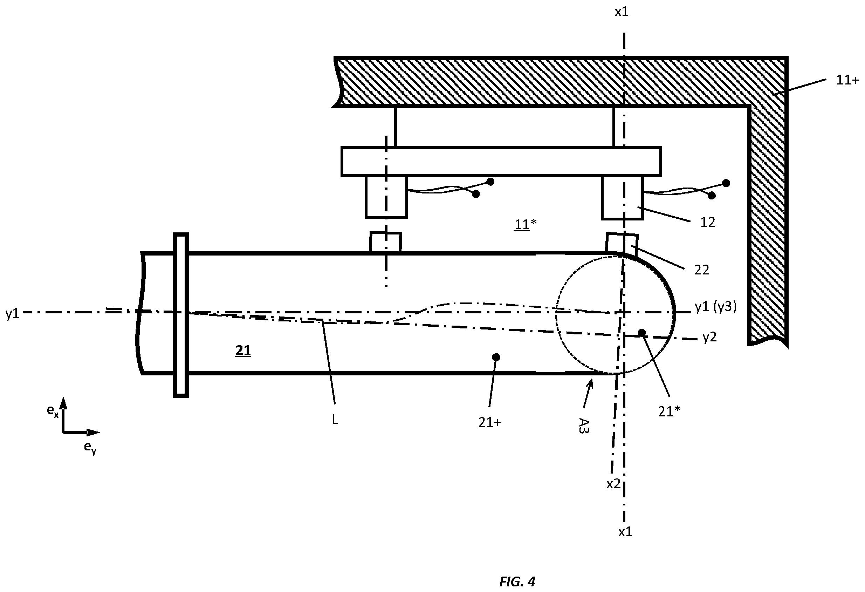

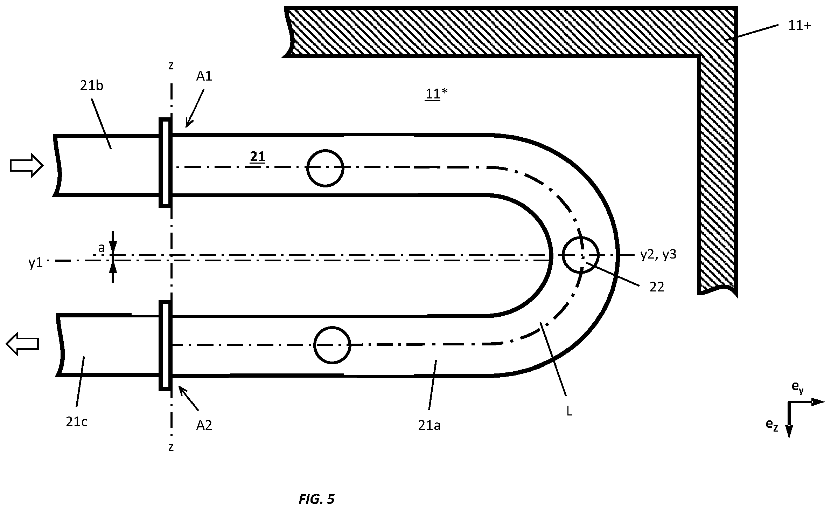

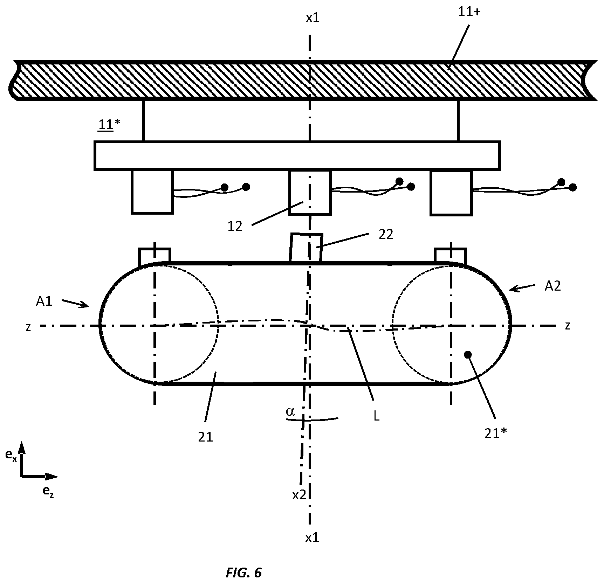

Naturgemäß weist der Meßaufnehmer - wie auch in Fig. 1a, 4, 5 und 6 jeweils angedeutet bzw. aus deren Zusammenschau ohne weiteres ersichtlich - mehrere gedachte Bezugsachsen auf, derart, daß eine (in Fig. 1a, 3, 5 und 6 sich jeweils in Richtung **e**_{z} erstreckende) erste Bezugsachse z einen Mittelpunkt einer einen Strömungsquerschnitt A1 des ersten Segment-Endes fassenden ebenen ersten Querschnittsfläche des Mittel-Segments und einen Mittelpunkt einer einen Strömungsquerschnitt A2 des zweiten Segment-Endes fassenden ebenen zweiten Querschnittsfläche des Mittel-Segments 21a imaginär verbindet (Fig. 1a, 5 bzw. 6), daß eine (in Fig. 3, 4 und 6 sich jeweils in Richtung **eₓ** erstreckende) zweite Bezugsachse x1 mit einer Längsachse der elektrischen Spule 12 koinzidiert bzw. durch nämliche Längsachse festgelegt ist (Fig. 4 bzw. 6), daß eine dritte Bezugsachse x2 mit einer Längsachse des Permanentmagneten 22 koinzidiert bzw. durch nämliche Längsachse festgelegt ist (Fig. 4 bzw. 6), daß eine (in Fig. 3, 4 und 5 sich jeweils in Richtung **e_{y}** erstreckende) vierte Bezugsachse y1 sowohl die Bezugsachse z als auch die Bezugsachse x1 jeweils rechtwinklig, nämlich mit einem Schnittwinkel von 90° schneidet (Fig. 4 bzw. 5), und daß eine fünfte Bezugsachse y2 sowohl die Bezugsachse z als auch die Bezugsachse x2 jeweils rechtwinklig schneidet (Fig. 4 bzw. 5). Darüberhinaus weist der Meßaufnehmer ferner auch eine sechste Bezugsachse y3 auf, die - wie auch in Fig. 4 und 5 angedeutet bzw. aus deren Zusammenschau ersichtlich - sowohl die Bezugsachse x2 als auch die Leitkurve L jeweils in einem rechten Winkel schneidet.

Zudem ist die Rohrwandung 21+, mithin das damit gebildete Rohr 21 auch so geformt - nicht zuletzt bedingt durch Toleranzen bei der Herstellung des Aufnehmer-Moduls M2 bzw. des Rohrs 21 -, daß eine - hier u.a. auch die Mittelpunkte der vorbezeichneten ersten und zweiten Querschnittsflächen imaginär verbindende - Leitkurve L einer durch die äußere Mantelfläche des Rohrs festgelegten Kanalfläche des Mittels-Segements 21a auch in statischer Ruhelage zumindest teilweise außerhalb einer durch die Bezugsachse z und die Bezugsachse y1 aufgespannten gedachten ersten Bezugsebene (yz1) des Meßaufnehmers verläuft; dies im besonderen auch in der Weise, daß die Leitkurve L, insb. in einem regelmäßig nicht vorhersehbaren und zudem auch nicht ohne weiteres nachprüfbaren Ausmaß, nämliche Bezugsebene (yz1) einmal oder mehrmals schneidet. Infolgedessen weist auch ein - naturgemäß nicht ohne weiteres nachprüfbarer - Verlauf eines seitlichen Abstandes der Leitkurve L zur Gehäusewand entsprechende Unregelmäßigkeiten auf; dies im besonderen auch derart, daß ein kleinster Abstand der Spule 12 von der Rohrwandung bzw. dem damit gebildeten Rohr lediglich näherungsweise vorherbestimmt werden kann bzw. daß, gemessen über eine Vielzahl von mittels ein und desselben Exemplars des Aufnehmer-Moduls M1 sowie einer Vielzahl von Exemplaren des Aufnehmer-Moduls M2 aufeinanderfolgenden gebildeten Meßsystem bzw. Meßsystem-Exemplaren, nämlicher kleinster Abstand eine vergleichsweise hohe Exemplarstreuung aufweisen kann. Zur Verringerung des Einflusses der vorbezeichneten herstellungsbedingten Unregelmäßigkeiten der (Rohr-)Form des Mittels-Segements 21a bzw. der dadurch bedingten Exemplarsteuung des vorbezeichneten kleinsten Abstand der Spule 12 von der Rohrwandung ist der Permanentmagnet des erfindungsgemäßen Meßaufnehmers so am Mittel-Segment 21a angebracht, insb. nämlich so positioniert und so ausgerichtet, daß in statischer Ruhelage des Rohrs eine durch die Bezugsachse x1 und die Bezugsachse y1 aufgespannte gedachte zweite Bezugsebene (xy1) des Meßaufnehmers parallel zu einer durch die die Bezugsachse x2 und die Bezugsachse y2 aufgespannten gedachten dritten Bezugsebene (xy2) des Meßaufnehmers ist oder daß - wie auch in Fig. 6 angedeutet - in statischer Ruhelage des Rohrs die vorbezeichneten zweiten und dritten Bezugsebenen einander allenfalls unter Bildung eines (kleinsten) Schnittwinkels α imaginär schneiden, der nicht mehr als 1°, beispielsweise nämlich nicht mehr als 0,5°, beträgt. Für den vorbezeichneten Fall, daß die gedachten zweiten und dritten Bezugsebene (xy1, xy2) des Meßaufnehmers zueinander parallel sind, ist ein Abstand zwischen nämlichen Bezugsebenen vorteilhaft so bemessen, der er nicht mehr als 0,5 mm, insb. nicht mehr als 0,1 mm, beträgt, idealerweise nämlich Null ist (a = 0), so daß also die Bezugsebene xy1 und die Bezugsebene xy2 zusammenfallen. Zudem spannen die Bezugsachse x2 und die Bezugsachse y3 eine gedachte vierte Bezugsebene xy3 des Meßaufnehmers auf und weist das Mittel-Segment 21a eine sowohl vom ersten Segment-Ende als auch vom zweiten Segment-Ende beabstandete dritte Querschnittsfläche A3 mit einer, insb. im Betrieb des Meßsystems im wesentlichen in die vorbezeichnete Strömungsrichtung des im Rohr geführten strömenden Fluids weisenden, (Flächen-)Normale auf, die einen Strömungsquerschnitt faßt, von dem ein Mittelpunkt dem Schnittpunkt der Bezugsachse y3 mit der Leitkurve L entspricht bzw. damit koinzidiert. Das wenigstens eine Rohr 21 kann ferner beispielsweise so ausgebildet sein, daß (bei fertiggestelltem Meßaufnhemer) zumindest das Mittel-Segment 21a bzw. die Leitkurve L in Projektion auf die vorbezeichnete Bezugsebene yz1 V-förmig oder, wie auch in Fig. 5 dargestellt, U-förmig ausgebildet ist.

Erfindungsgemäß ist der Permanentmagnet 22 ferner so am Mittel-Segment 21a angebracht, daß der Strömungsquerschnitt der Querschnittsfläche A3 und die Bezugsebene xy3 einander unter Bildung eines von Null verschiedenen, beispielsweise nämlich mehr als 0,1° betragenden, (kleinsten) Schnittwinkels imaginär schneiden. In

Ergänzung dazu ist der Permanentmagnet 22 nach einer weiteren Ausgestaltung der Erfindung ferner so am Mittel-Segment 21a angebracht, daß die Bezugsachse y3 einer Minimaltraverse nämlicher (Flächen )Normalen und der Bezugsachse x2 entspricht und/oder daß bei in das Aufnehmer-Modul M1 eingebautem Aufnehmer-Modul M2 die Bezugsachse x1 parallel zur Bezugsachse x2 ist oder damit zusammenfällt.

Die bei der werkseitigen, mithin vom Aufnehmer-Modul M1 entfernt durchgeführten Herstellung des Aufnehmer-Moduls M2 für die jeweils exakte Positionierung und Ausrichtung des Permanentmagneten 21 am Mittel-Segment 21a erforderlichen, gleichwohl im Aufnehmer-Modul M1 etablierten Bezugsachsen z, x1 bzw. y1 können beispielsweise in einem entsprechend kalibrierten, nämlich zumindest Einbauposition und -lage des Aufnehmer-Moduls M2 im Aufnehmer-Modul M1 exakt vorgebenden sowie Position und Lage der elektrischen Spule 12 im Aufnehmer-Modul M1 exakt nachbildende Montageplatz für das Aufnehmer-Modul M2 bei der Herstellung bereitgestellt werden. Abgleitet aus den Bezugsachsen z, x1 und y1 können damit auch die Bezugsachsen x2 bzw. y2 im Montageplatz mittels entsprechender Positionier- und Justageelemente und/oder mittels entsprechender Markierungen, beispielsweise auch in Form von durch Laserstrahlen entsprechend generierte Referenzpunkt und/oder -linien, vorgegeben werden.

## Patentansprüche

1. Meßaufnehmer vom Vibrationstyp, umfassend:
- ein erstes Aufnehmer-Modul (M1), das
-- ein Aufnehmer-Gehäuse (11) mit wenigstens einer von einer Gehäusewand (11+) zumindest teilweise umhüllten Kammer (11*)
-- sowie wenigstens eine innerhalb der Kammer (11*) des Aufnehmer-Gehäuses plazierte und mit der Gehäusewand (11+) zumindest mittelbar mechanisch verbundene, insb. zylindrische, erste elektrische Spule (12) aufweist;
- sowie ein zweites Aufnehmer-Modul (M2), das
-- wenigstens ein, insb. zumindest abschnittsweise gerades und/oder zumindest abschnittsweise gebogenes, erstes Rohr (21)
--- mit einer eine äußere Mantelfläche des Rohrs bildenden Rohrwandung (21+), insb. aus einem Metall oder einem Kunststoff,
--- und mit einem von nämlicher Rohrwandung umhüllten Lumen (21*),
-- sowie wenigstens einen, insb. zylindrischen, ersten Permanentmagneten (22) aufweist;
- wobei der Permanentmagnet außen an einem sich zwischen einem, insb. einlaßseitigen, ersten Segment-Ende und einem davon entfernten, insb. auslaßseitigen, zweiten Segment-Ende erstreckenden Mittel-Segment der Rohrwandung fixiert ist, insb. nämlich stoffschlüssig damit verbunden ist;
- wobei das zweite Aufnehmer-Modul in das erste Aufnehmer-Modul eingesetzt und damit wieder lösbar mechanisch fest verbunden ist, derart, daß zumindest das Mittel-Segment des Rohrs innerhalb der Kammer des Aufnehmer-Gehäuses plaziert, gleichwohl von der Gehäusewand beabstandet ist, insb. nämlich derart, daß das zweite Aufnehmer-Modul innerhalb des ersten Aufnehmer-Moduls fest sitzt bzw. nicht beweglich ist;
- und wobei das Rohr dafür eingerichtet ist, in seinem Lumen ein, insb. mit einer vorgebbaren und/oder vom ersten Segment-Ende zum zweiten Segment-Ende weisenden Strömungsrichtung, strömendes Fluid zu führen und währenddessen vibrieren gelassen zu werden, derart, daß das Mittel-Segment Schwingungsbewegungen um eine statische Ruhelage ausführt;
- wobei der Meßaufnehmer mehrere gedachte Bezugsachsen aufweist, von denen
-- eine erste Bezugsachse (z) einen Mittelpunkt einer einen Strömungsquerschnitt (A1) des ersten Segment-Endes fassenden ebenen ersten Querschnittsfläche des Mittel-Segments und einen Mittelpunkt einer einen Strömungsquerschnitt (A2) des zweiten Segment-Endes fassenden ebenen zweiten Querschnittsfläche des Mittel-Segments imaginär verbindet,
-- eine zweite Bezugsachse (x1) mit einer Längsachse der elektrischen Spule koinzidiert bzw. durch nämliche Längsachse festgelegt ist,
-- eine dritte Bezugsachse (x2) mit einer Längsachse des Permanentmagneten koinzidiert bzw. durch nämliche Längsachse festgelegt ist,
-- eine vierte Bezugsachse (y1) sowohl die erste Bezugsachse (z) als auch die zweite Bezugsachse (x1) jeweils rechtwinklig schneidet,
-- und eine fünfte Bezugsachse (y2) sowohl die erste Bezugsachse (z) als auch die dritte Bezugsachse (x2) jeweils rechtwinklig schneidet;
- wobei die Rohrwandung, mithin das damit gebildete Rohr so geformt ist, daß, insb. bedingt durch Toleranzen bei der Herstellung des zweiten Aufnehmer-Moduls, eine, insb. auch die Mittelpunkte der ersten und zweiten Querschnittsflächen imaginär verbindende, Leitkurve (L) einer durch die äußere Mantelfläche des Rohrs festgelegten Kanalfläche des Mittel-Segments auch in statischer Ruhelage zumindest teilweise außerhalb einer durch die ersten und vierten Bezugsachsen (z, y1) aufgespannten gedachten ersten Bezugsebene (yz1) des Meßaufnehmers verläuft, insb. nämlich die gedachte erste Bezugsebene einmal oder mehrmals schneidet;
- wobei der Meßaufnehmer eine sechste Bezugsachse (y3) aufweist, die sowohl die dritte Bezugsachse (x2) als auch die Leitkurve jeweils rechtwinklig schneidet
- und wobei das Mittel-Segment eine sowohl vom ersten Segment-Ende als auch vom zweiten Segment-Ende beabstandete dritte Querschnittsfläche (A3) mit einer, insb. im wesentlichen in eine Strömungsrichtung eines im Rohr geführten strömenden Fluids weisenden, Flächennormale aufweist, die einen Strömungsquerschnitt faßt, von dem ein Mittelpunkt dem Schnittpunkt der sechsten Bezugsachse (y3) mit der Leitkurve (L) entspricht bzw. damit koinzidiert;
- wobei der Permanentmagnet so am Mittel-Segment angebracht, insb. nämlich so positioniert und so ausgerichtet, ist,
-- daß in statischer Ruhelage des Rohrs eine durch die zweiten und vierten Bezugsachsen (x1, y1) aufgespannte gedachte zweite Bezugsebene (xy1) des Meßaufnehmers parallel zu einer durch die dritten und fünften Bezugsachsen (x2, y2) aufgespannten gedachten dritten Bezugsebene (xy2) des Meßaufnehmers ist, insb. derart, daß die zweiten und dritten Bezugsebenen zusammenfallen (a = 0) oder einen Abstand (a) aufweisen, der nicht mehr als 0,5 mm, insb. nicht mehr als 0,1 mm, beträgt,
-- oder daß in statischer Ruhelage des Rohrs die zweiten und dritten Bezugsebenen einander unter Bildung eines kleinsten Schnittwinkels (α) imaginär schneiden, welcher Schnittwinkel nicht mehr als 1°, insb. nicht mehr als 0,5°, beträgt;
- wobei die dritten und sechsten Bezugsachsen (x2, y3) eine gedachte vierte Bezugsebene (xy3) des Meßaufnehmers aufspannen
- und wobei der Strömungsquerschnitt der dritten Querschnittsfläche (A3) und die vierte Bezugsebene (xy3) einander unter Bildung eines von Null verschiedenen, nämlich mehr als 0,1° betragenden kleinsten Schnittwinkels imaginär schneiden.

2. Meßaufnehmer nach dem vorherigen Anspruch,
- wobei die dritte Bezugsachse (x2) und die (Flächen-)Normale des Strömungsquerschnitts der dritten Querschnittsfläche windschief sind, insb. derart, daß die sechste Bezugsachse (y3) einer Minimaltraverse nämlicher Flächennormalen und der dritten Bezugsachse (x2) entspricht.

3. Meßaufnehmer nach einem der vorherigen Ansprüche, wobei die zweiten und dritten Bezugsachsen (x1, x2) parallel sind, insb. nämlich zusammenfallen.

4. Meßaufnehmer nach einem der vorherigen Ansprüche, wobei das wenigstens eine Rohr mittels eines an das erste Segment-Ende des Mittel-Segments anschließenden, insb. einlaßseitigen, ersten Anschluß-Segments und mittels eines an das zweite Segment-Ende des Mittel-Segments anschließenden, insb. auslaßseitigen, zweiten Anschluß-Segments mit dem Aufnehmer-Gehäuse mechanisch gekoppelt ist, insb. nämlich starr, nämlich derart mit dem Aufnehmer-Gehäuse verbunden ist, daß Verschiebungen der ersten und zweiten Anschluß-Segmente relativ zum Aufnehmer-Gehäuse verhindert werden und/oder daß das zweite Aufnehmer-Modul innerhalb des ersten Aufnehmer-Moduls fest sitzt bzw. nicht beweglich ist.

5. Meßaufnehmer nach einem der vorherigen Ansprüche, wobei das wenigstens eine Rohr, insb. nämlich dessen Mittel-Segment bzw. die Leitkurve, in Projektion auf die erste Bezugsebene (yz1) U-förmig oder V-förmig ausgebildet ist.

6. Meßaufnehmer nach einem der vorherigen Ansprüche, wobei die elektrische Spule und der Permanentmagnet eine Schwingspule bzw. eine Tauchspule bilden.

7. Meßaufnehmer nach einem der vorherigen Ansprüche, weiters umfassend: eine elektromechanische Erregeranordnung zum Anregen und Aufrechterhalten erzwungener Schwingungen des Mittel-Segments des wenigstens einen Rohrs.

8. Meßaufnehmer nach dem vorherigen Anspruch, wobei die Erregeranordnung mittels der elektrischen Spule und mittels des Permanentmagneten gebildet ist.

9. Meßaufnehmer nach einem der vorherigen Ansprüche, weiters umfassend: eine elektromechanische Sensoranordnung zum Erfassen erzwungener Schwingungen des Mittel-Segments des wenigstens einen Rohrs und zum Bereitstellen wenigstens eines nämliche Schwingungen des Mittel-Segments repräsentierenden Schwingungssignals.

10. Meßaufnehmer nach dem vorherigen Anspruch, wobei die Sensoranordnung mittels der elektrischen Spule und mittels des Permanentmagneten gebildet ist.

11. Meßaufnehmer nach einem der vorherigen Ansprüche, wobei das zweite Aufnehmer-Modul austauschbar ausgebildet ist, derart, daß es aus dem ersten Aufnehmer-Modul, insb. zerstörungsfrei, wieder ausbaubar ist, insb. nämlich von außerhalb des Aufnehmer-Gehäuses herausnehmbar ist.

12. Meßaufnehmer nach einem der vorherigen Ansprüche, wobei das zweite Aufnehmer-Modul weiters wenigstens ein zum ersten Rohr baugleiches und/oder gleichermaßen wie das erste Rohr innerhalb des Aufnehmer-Gehäuses plaziertes und damit, insb. wieder lösbar, mechanisch verbundenes zweites Rohr aufweist.

13. Vibronisches Meßsystem, insb. Coriolis-Massenstrom-Meßgerät, umfassend einen Meßaufnehmer nach einem der vorherigen Ansprüche sowie eine an die wenigstens eine Spule, insb. wieder lösbar, elektrisch angeschlossene Meßsystem-Elektronik, wobei die Meßsystem-Elektronik eingerichtet ist, mittels eines elektrischen Treibersignals, insb. mit einem eingeprägten Wechselstrom, elektrische Leistung in die Spule einzuspeisen und/oder eine, insb. Schwingungen des Mittel-Segments repräsentierende, elektrische Spannung von der Spule abzugreifen, insb. nämlich anhand der Spannung Schwingungen des Mittel-Segments auszuwerten und/oder Meßwerte für wenigstens eine Meßgröße eines im Rohr strömenden Fluids zu ermitteln.

## Claims

1. A vibration-type measuring transducer, comprising:
- A first sensor module (M1) which has
∘ a sensor housing (11) with at least one chamber (11*) which is at least partially enclosed by a housing wall (11+)
∘ and at least one, in particular cylindrical, first electric coil (12) which is positioned inside the chamber (11*) of the sensor housing and is mechanically connected to the housing wall (11+) at least indirectly;
- and a second sensor module (M2) which has
∘ at least one first tube (21), in particular straight at least in sections and/or curved at least in sections,
▪ with a tube wall (21+) which forms an outer lateral surface of the tube, in particular made from a metal or synthetic material,
▪ and with a lumen (21*) enclosed by said tube wall,
∘ as well as at least one, in particular cylindrical, first permanent magnet (22);
- wherein the permanent magnet on the outside is secured to a center segment of the tube wall extending between a first segment end, in particular on the inlet side, and a second segment end, in particular on the outlet side, at a distance from it, that is to say, in particular has a permanent material bond with it;
- wherein the second sensor module is inserted into the first sensor module and is securely mechanically connected to it so that it can be detached again in such a way that at least the center segment of the tube is positioned inside the chamber of the sensor housing but at a distance from the housing wall, that is to say, in particular in such a way that the second sensor module is securely seated inside the first sensor module and is not movable;
- and wherein the tube is configured to conduct in its lumen a flowing fluid, in particular one with a specifiable flow direction and/or a flow direction going from the first segment end to the second segment end, and during this to be caused to oscillate in such a way that the center segment performs oscillatory movements around a static resting position;
- wherein the sensor has several imaginary reference axes, of which
∘ a first reference axis (z) imaginarily joins a center point of a level first cross-sectional area of the center segment containing a flow cross-section (A1) of the first segment end and a center point of a level second cross-sectional area of the center segment containing a flow cross-section (A2) of the second segment end,
∘ a second reference axis (x1) coincides with a longitudinal axis of the electric coil or is defined by said longitudinal axis,
∘ a third reference axis (x2) coincides with a longitudinal axis of the permanent magnet or is defined by said longitudinal axis,
∘ a fourth reference axis (y1) intersects both the first reference axis (z) and the second reference axis (x1) at a right angle,
∘ and a fifth reference axis (y2) intersects both the first reference axis (z) and the third reference axis (x2) at a right angle;
- wherein the tube wall, and therefore the tube it forms, are formed in such a way that, in particular due to tolerances when manufacturing the second sensor module, a directrix (L), in particular one which also imaginarily joins the center points of the first and second cross-sectional areas of a channel surface of the center segment defined by the outer lateral surface of the tube extends at least partly outside an imaginary first reference plane (yz1) of the measuring transducer formed by the first and fourth reference axes (z, y1), also in the static resting position, that is to say, in particular intersects the imaginary first reference plane one or more times;
- wherein the measuring transducer has a sixth reference axis (y3) which intersects both the third reference axis (x2) and the directrix at a right angle;
- and wherein the center segment has a third cross-sectional area (A3) at a distance both from the first segment end and from the second segment end with a surface normal, in particular mostly corresponding to a flow direction of a flowing fluid conducted in the tube, said surface normal containing a flow cross-section, of which a center point corresponds to the point where the sixth reference axis (y3) and the directrix (L) intersect or coincide;
- wherein the permanent magnet is attached to the center segment, that is to say, in particular is positioned and aligned,
∘ in such a way that, in the static resting position of the tube, an imaginary second reference plane (xy1) of the measuring transducer formed by the second and fourth reference axes (x1, y1) is parallel to an imaginary third reference plane (xy2) of the measuring transducer formed by the third and fifth reference axes (x2, y2), in particular in such a way that the second and third reference planes coincide (a = 0) or are spaced apart by a distance (a) that does not exceed 0.5 mm, in particular does not exceed 0.1 mm,
∘ or in such a way that, in the static resting position of the tube, the second and third reference planes imaginarily intersect, forming a smallest angle of intersection (a), said angle of intersection not exceeding 1°, in particular not exceeding 0.5°;
- wherein the third and sixth reference axes (x2, y3) form an imaginary fourth reference plane (xy3) of the measuring transducer
- and wherein the flow cross-section of the third cross-sectional area (A3) and the fourth reference plane (xy3) imaginarily intersect, forming a smallest angle of intersection which is not zero, that is to say is more than 0.1°.

2. The measuring transducer as claimed in the preceding claim,
- wherein the third reference axis (x2) and the (surface) normal of the flow cross-section of the third cross-sectional area are skew, in particular in such a way that the sixth reference axis (y3) corresponds to a minimum traverse of said surface normal and the third reference axis (x2).

3. The measuring transducer as claimed in one of the preceding claims, wherein the second and third reference axes (x1, x2) are parallel, that is to say, in particular coincide.

4. The measuring transducer as claimed in one of the preceding claims, wherein the at least one tube is mechanically coupled to the sensor housing by means of an, in particular inlet-side, first connecting segment adjoining the first segment end of the center segment and by means of an, in particular outlet-side, second connecting segment adjoining the second segment end of the center segment, that is to say, in particular is rigidly connected, that is to say is connected to the sensor housing in such a way that the first and second connecting segments are prevented from moving relative to the sensor housing and/or in such a way that the second sensor module is securely seated inside the first sensor module and is not movable.

5. The measuring transducer as claimed in one of the preceding claims, wherein the at least one tube, that is to say, in particular its center segment or the directrix, is U-shaped or V-shaped in projection onto the first reference plane (yz1).

6. The measuring transducer as claimed in one of the preceding claims, wherein the electric coil and the permanent magnet form an air coil or a plunger coil.

7. The measuring transducer as claimed in one of the preceding claims, further comprising: An electromechanical exciter arrangement for initiating and maintaining forced oscillations of the center segment of the at least one tube.

8. The measuring transducer as claimed in the preceding claim, wherein the exciter arrangement is formed by the electric coil and by the permanent magnet.

9. The measuring transducer as claimed in one of the preceding claims, further comprising: An electromechanical sensor arrangement for detecting forced oscillations of the center segment of the at least one tube and for supplying at least one oscillation signal representing said oscillations of the center segment.

10. The measuring transducer as claimed in the preceding claim, wherein the sensor arrangement is formed by the electric coil and by the permanent magnet.

11. The measuring transducer as claimed in one of the preceding claims, wherein the second sensor module is designed to be replaceable so that it can be removed again from the first sensor module, in particular without destroying it, that is to say, in particular it can be removed from outside the sensor housing.

12. The measuring transducer as claimed in one of the preceding claims, wherein the second sensor module further has at least one second tube identical in design to the first tube and/or also positioned inside the sensor housing like the first tube and therefore mechanically connected to it, in particular so that it can be detached again.

13. A vibronic measuring system, in particular a Coriolis mass flowmeter, comprising a measuring transducer as claimed in one of the preceding claims and measuring system electronics electrically connected to the at least one coil, in particular such that they can be detached again, wherein the measuring system electronics are configured to feed electrical power into the coil by means of an electric driver signal, in particular with an impressed alternating current, and/or to tap an electric voltage from the coil, in particular one representing oscillations of the center segment, that is to say, in particular to assess oscillations of the center segment based on the voltage and/or to determine measured values for at least one measured variable of a fluid flowing in the tube.

## Revendications

1. Capteur du type à vibration, comprenant :
- un premier module capteur (M1), lequel comprend
-- un boîtier de capteur (11) avec au moins une chambre (11*) au moins partiellement entourée par une paroi de boîtier (11+)
-- ainsi qu'au moins une première bobine électrique (12), notamment cylindrique, placée à l'intérieur de la chambre (11*) du boîtier de capteur et reliée au moins indirectement mécaniquement à la paroi de boîtier (11+) ;
- ainsi qu'un deuxième module capteur (M2), lequel comprend
-- au moins un premier tube (21), notamment au moins partiellement droit et/ou au moins partiellement courbé
--- avec une paroi de tube (21+) formant une surface d'enveloppe extérieure du tube, laquelle paroi est notamment en métal ou en plastique,
--- et avec un canal intérieur (21*) entouré par ladite paroi de tube,
-- ainsi qu'au moins un premier aimant permanent (22), notamment cylindrique,
- l'aimant permanent étant fixé à l'extérieur sur un segment central de la paroi de tube s'étendant entre une première extrémité de segment, notamment du côté entrée, et une deuxième extrémité de segment éloignée de celle-ci, notamment du côté sortie, lequel aimant permanent est notamment relié à ladite paroi par liaison de matière ;
- le deuxième module capteur étant inséré dans le premier module capteur et relié à celui-ci de manière amovible et mécanique, de telle sorte qu'au moins le segment central du tube soit placé à l'intérieur de la chambre du boîtier de capteur, tout en étant espacé de la paroi de boîtier, notamment de telle sorte que le deuxième module capteur soit fixé à l'intérieur du premier module capteur ou ne puisse pas bouger ;
- et le tube étant conçu pour guider dans son canal intérieur un produit s'écoulant notamment dans une direction d'écoulement prédéfinie et/ou orientée de la première extrémité du segment vers la deuxième extrémité du segment, et pour être mis en vibration pendant ce temps, de telle sorte que le segment central effectue des mouvements de vibration autour d'une position de repos statique ;
- le capteur comportant plusieurs axes de référence imaginaires, parmi lesquels
-- un premier axe de référence (z) relie de manière imaginaire un point central d'une première surface de section transversale plane du segment central, laquelle englobe une section transversale d'écoulement (A1) de la première extrémité du segment, et un point central d'une deuxième surface de section transversale plane du segment central, laquelle englobe une section transversale d'écoulement (A2) de la deuxième extrémité du segment,
-- un deuxième axe de référence (x1) coïncide avec un axe longitudinal de la bobine électrique ou est défini par ledit axe longitudinal,
-- un troisième axe de référence (x2) coïncide avec un axe longitudinal de l'aimant permanent ou est défini par ledit axe longitudinal,
-- un quatrième axe de référence (y1) coupe à angle droit à la fois le premier axe de référence (z) et le deuxième axe de référence (x1),
-- et un cinquième axe de référence (y2) coupe à angle droit à la fois le premier axe de référence (z) et le troisième axe de référence (x2) ;
- la paroi de tube, et donc le tube ainsi constitué, étant formée de telle sorte que, notamment en raison des tolérances lors de la fabrication du deuxième module capteur, une courbe directrice (L) - laquelle relie notamment également de manière imaginaire les centres des première et deuxième surfaces transversales
- d'une surface de canal du segment central définie par la surface d'enveloppe extérieure du tube s'étend, même en position statique de repos, au moins en partie à l'extérieur d'un premier plan de référence imaginaire (yz1) du capteur, lequel plan est défini par les premier et quatrième axes de référence (z, y1), notamment en coupant une ou plusieurs fois le premier plan de référence imaginaire ;
- le capteur présentant un sixième axe de référence (y3), lequel coupe à angle droit à la fois le troisième axe de référence (x2) et la courbe directrice
- et le segment central présentant une troisième surface transversale (A3) espacée à la fois de la première extrémité de segment et de la deuxième extrémité de segment, laquelle surface transversale présente une normale à la surface orientée notamment essentiellement dans une direction d'écoulement d'un produit s'écoulant dans le tube, laquelle surface transversale englobe une section transversale d'écoulement dont le centre correspond au point d'intersection du sixième axe de référence (y3) avec la courbe directrice (L) ou coïncide avec ledit axe ;
- l'aimant permanent étant fixé au segment central, notamment positionné et orienté
-- de telle sorte que, lorsque le tube est en position statique de repos, un deuxième plan de référence imaginaire (xy1) du capteur, lequel plan est défini par les deuxième et quatrième axes de référence (x1, y1), soit parallèle à un troisième plan de référence imaginaire (xy2) du capteur, lequel plan est défini par les troisième et cinquième axes de référence (x2, y2) du capteur, notamment de telle sorte que les deuxième et troisième plans de référence coïncident (a = 0) ou présentent un écart (a) qui n'est pas supérieur à 0,5 mm, notamment pas supérieur à 0,1 mm ,
-- ou de telle sorte que, lorsque le tube est en position statique de repos, les deuxième et troisième plans de référence se coupent de manière imaginaire en formant un angle d'intersection minimal (α), lequel angle d'intersection ne dépasse pas 1°, notamment ne dépasse pas 0,5° ;
- les troisième et sixième axes de référence (x2, y3) définissant un quatrième plan de référence imaginaire (xy3) du capteur
- et la section transversale d'écoulement de la troisième surface transversale (A3) et le quatrième plan de référence (xy3) se coupant de manière imaginaire en formant un angle d'intersection minimal différent de zéro, à savoir supérieur à 0,1°.

2. Capteur selon la revendication précédente,
- pour lequel le troisième axe de référence (x2) et la normale (à la surface) de la section transversale d'écoulement de la troisième surface transversale sont inclinés, notamment de telle sorte que le sixième axe de référence (y3) corresponde à une traverse minimale desdites normales à la surface et au troisième axe de référence (x2).

3. Capteur selon l'une des revendications précédentes, pour lequel les deuxième et troisième axes de référence (x1, x2) sont parallèles, notamment coïncident.

4. Capteur selon l'une des revendications précédentes, pour lequel l'au moins un tube est couplé mécaniquement - notamment de manière rigide, au boîtier du capteur au moyen d'un premier segment de raccordement, notamment côté entrée, lequel premier segment est raccordé à la première extrémité du segment central, et au moyen d'un deuxième segment de raccordement, notamment côté sortie, lequel deuxième segment est raccordé à la deuxième extrémité du segment central - de telle sorte que les déplacements des premier et deuxième segments de raccordement par rapport au boîtier du capteur sont empêchés et/ou que le deuxième module de capteur est fixé à l'intérieur du premier module de capteur ou n'est pas mobile.

5. Capteur selon l'une des revendications précédentes, pour lequel l'au moins un tube, notamment son segment central ou sa courbe directrice, est conçu en forme de U ou de V en projection sur le premier plan de référence (yz1).

6. Capteur selon l'une des revendications précédentes, pour lequel la bobine électrique et l'aimant permanent forment respectivement une bobine mobile et une bobine à noyau plongeur.

7. Capteur selon l'une des revendications précédentes, comprenant an outre : un circuit d'excitation électromécanique destiné à exciter et à maintenir des vibrations forcées du segment central de l'au moins un tube.

8. Capteur selon la revendication précédente, pour lequel le circuit d'excitation est formé par la bobine électrique et l'aimant permanent.

9. Capteur selon l'une des revendications précédentes, comprenant en outre : un agencement de capteurs électromécanique destiné à la détection des vibrations forcées du segment central de l'au moins un tube et à fournir au moins un signal de vibration représentant lesdites vibrations du segment central.

10. Capteur selon la revendication précédente, pour lequel l'agencement de capteurs est formé par la bobine électrique et l'aimant permanent.

11. Capteur selon l'une des revendications précédentes, pour lequel le deuxième module capteur est conçu de manière interchangeable, de telle sorte à pouvoir être retiré du premier module capteur, notamment sans destruction, et notamment retiré de l'extérieur du boîtier du capteur.

12. Capteur selon l'une des revendications précédentes, pour lequel le deuxième module capteur comporte en outre au moins un deuxième tube de construction identique au premier tube et/ou placé de la même manière que le premier tube à l'intérieur du boîtier de capteur et relié mécaniquement audit boîtier, notamment de manière amovible.

13. Système de mesure vibronique, notamment un débitmètre massique Coriolis, comprenant un capteur selon l'une des revendications précédentes ainsi qu'un système électronique de mesure raccordé électriquement à l'au moins une bobine, notamment de manière amovible, le système électronique de mesure étant conçu pour alimenter la bobine en puissance électrique au moyen d'un signal d'attaque électrique, notamment avec un courant alternatif injecté, et/ou pour prélever une tension électrique, représentant notamment les vibrations du segment central, à partir de la bobine, notamment à l'aide de la tension, pour évaluer les vibrations du segment central et/ou pour déterminer des valeurs mesurées pour au moins une grandeur de mesure d'un produit s'écoulant dans le tube.
